# EUROPEAN PATENT SPECIFICATION

(11) **EP 2 759 865 B1**
(45) Date of publication and mention of the grant of the patent: **22.08.2018**
(21) Application number: 13163056.8
(22) Date of filing: 10.04.2013
(51) Int. Cl.: G02F 1/1333

(54) **Liquid crystal display panel and method for manufacturing the same**
Flüssigkristallanzeigetafel und Herstellungsverfahren dafür
Panneau d'affichage à cristaux liquides et son procédé de fabrication

(30) Priority: 28.01.2013 CN 201310032342
(43) Date of publication of application: 30.07.2014
(73) Proprietor: Xiamen Tianma Micro_Electronics Co., Ltd, Xiamen, Xinjiang 361101 (CN)
(72) Inventor: Yang, Kangpeng, Xiamen Xinjiang 361101 (CN); Li, Yuan, Xiamen Xinjiang 361101 (CN)
(74) Representative: Prinz & Partner mbB

(56) References cited:
- WO-A1-2005/003849
- WO-A2-2006/088796
- JP-A- H0 333 720
- JP-A- H03 107 123
- JP-A- 2005 091 681
- US-A1- 2008 309 865

## Description

### Field of the Invention

The present invention relates to the technical field of a Liquid Crystal Display (LCD), and more particularly, to an LCD panel and a method for manufacturing the LCD panel.

### Background of the Invention

A liquid crystal, which is of a special substance form, is characterized by both a birefringence feature specific to a crystal and a liquid fluidity feature. A Liquid Crystal Display (LCD) is a display device produced based on the fact that an optical property of a liquid crystal molecule changes under the effect of an external electric field, and is divided into various types, which have been widely applied to a variety of displays and electronic instruments so far. However, due to a material limitation of a liquid crystal, the response time of the liquid crystal is increased at a low temperature. The increased response time of the liquid crystal deteriorates an image display quality, resulting in streaking and smears of a dynamic image, which affects a visual effect. If the temperature further drops (e.g. below -30°C), the orientation layer of the display device will be failed and turn into a crystal due to the nonexistence of the liquid crystal state, thus an image cannot be displayed due to the loss of the liquid crystal state performance.

In order to solve the above problems, a heater is employed to heat the LCD screen in the prior art. For example, a Chinese patent No. CN2503560Y discloses a liquid crystal display module operatable normally under a ultralow temperature, which includes a printed circuit board, an LED backlight, a liquid crystal display and a heater provided between the LED backlight and the liquid crystal display, where the heater is a glass plate with a transparent conductive film, and electrodes are arranged adjacent to both short sides of the glass plate and may be inserted into insertion holes at both lateral sides of the printed circuit board.

US patent application No. 2008/309865A1 discloses a liquid crystal display panel, where a liquid crystal layer is sandwiched between a TFT substrate and a color filter substrate. An ITO film is formed on a front surface of the color filter substrate. By supplying an electric current to the ITO film at the time of staring an operation of the liquid crystal display panel, a temperature of the liquid crystal layer is elevated to a level which allows the liquid crystal layer to perform a normal operation within a short time. By forming a plating electrode on two sides of the color filter substrate, it is possible to uniformly supply an electric current to the ITO film thus enabling uniform heating of the color filter substrate.

PCT application WO 2006/088796 A2 discloses a flat panel display, which has an optically-transparent electrically-conductive layer, especially an indium tin oxide layer, directly formed on an outer front surface of a liquid crystal display (LCD) assembly having a front plate, a rear plate, and a layer of liquid crystal material interposed between said front and rear plates. The optically-transparent electrically-conductive layer is preferably uniform and functions as an integral heater when connected to a direct current power source.

JP patent application NO.2005091681A discloses a liquid crystal display device, which is capable of improving the display quality of a liquid crystal display element by making uniform the temperature of a display area of a liquid crystal display panel through proper heating using a panel heater. A heat generation part of the panel heater 6 is formed opposite the part where a temperature detector 5 for a display area and a non-display area of the liquid crystal display panel 4 is disposed.

JP patent application H03107123A discloses a panel heater, where the panel heater of a less temp. distribution by forming the electrode shape of the panel heater to a stripe shape and forming the electrodes wider in a part of the width thereof than the end part on one side. The SnO₂ electrodes 2 for heat generation and the Al electrodes 3 for voltage impression are formed on one surface of a glass substrate 1 and the taking-out electrodes 4 are formed on the rear surface in the broadest part (b) of the SnO2 electrodes 2. A liquid crystal cell is connected to a driving circuit in the taking-out electrode part and are driven by incorporating the same into a housing. The heater is simultaneously energized. The tendency to an increase in the temp. nearer the taking-out electrodes of the liquid crystal cell by the heat generation of a driving IC or the like is adjusted in this way and the nearly uniform temp. having a temp. difference as slight as about + or -2 deg.C over the entire surface of the substrate is obtd.

JP patent application H0333720A discloses a matrix liquid crystal display device, where to compensate temperature, to obtain superior display performance even in low-temperature environment, and to improve the utilization efficiency of light by incorporating a matrix-shaped heater. The matrix-shaped heater 10 made of a metallic film is provided on the opposite surface of a color filter substrate from a color filter. Namely, the matrix heater 10 is provided in matrix on the entire display surface by Y buses 13 and X buses 14 and heater terminals 11 are provided at the four corners. The Y buses 13 are provided on all prolongations of signal lines and the X buses 14 are provided on prolongations of scanning lines intermittently in sequence closely in the center of the display surface and roughly on the terminal sides.; Consequently, superior display characteristics which are fast in response speed at low temperature are obtained and the effective utilization of light is never impeded.

PCT application WO 2005/003849 A1 discloses A Polymer Dispersed Liquid Crystal (PDLC) capable of consistent performance over a wide temperature range. The PDLC includes electrodes connected to each of the resistive layers, such as ITO layers, of the PDLC. A FET switch couples each electrode to a corresponding capacitor. The capacitors are charged using a power source. The energy stored in the capacitors can be transferred to the resistive layers to heat the PDLC. A controller can pulse the FET switches to control the amount of energy transferred from the capacitors to the resistive layers.

In the prior art, the heater provided between the backlight and the liquid crystal display device increases the thickness of the liquid crystal display module and the structural complexity.

Further in the use of the liquid crystal display, after the voltage applied on the liquid crystal cell is removed, the electric field in the liquid crystal cell will not disappear instantaneously due to electrostatic induction, and partial pixels are still in the display status, which disappears after a while. At present, many manufacturers adopt such a method that an antistatic agent is added into the liquid crystal to reduce the residual time of the static electricity, but the method reduces the reliability of the liquid crystal display due to the addition of foreign matters into the liquid crystal. However, other methods for reducing the static electricity may also increase the structural complexity.

In view of the increasing demands for light-weight, thin, short and small electronic products, there is a need for liquid crystal display devices that are more compact in the structure to reduce the weight.

### Summary of the Invention

It is an object of the present invention to provide a liquid crystal display panel and a method for manufacturing the same, which are advantageous in that: the liquid crystal display panel can be heated at a low temperature; the cost, the contact resistance and the thickness of the module can be reduced effectively; the heating effect is improved and the display effect of the liquid crystal display at a low temperature is improved; and meanwhile the antistatic ability of the liquid crystal display panel can be enhanced.

In order to achieve the above mentioned object, the present invention proposes the following technical solution.

A liquid crystal display panel, includes:
an array substrate;
a color filter substrate arranged opposite to the array substrate; and
a liquid crystal layer filled between the array substrate and the color filter substrate;
where a transparent conductive metal oxide film lies on a side surface of the color filter substrate away from the liquid crystal layer, conductive metal strips separated from each other and electrically connected with the transparent conductive metal oxide film are provided at side edges of the transparent conductive metal oxide film, and an external current is allowed to flow through the transparent conductive metal oxide film via the conductive metal strips; wherein a polarizer (4) is provided on the side surface of the transparent conductive metal oxide film (3) facing away from the color filter substrate (1); and the polarizer (4) covers the whole transparent conductive metal oxide film (3); and each of the conductive metal strips (5) is only along the side edge of the transparent conductive metal oxide film (3).

Further, a heating electrode is provided on the array substrate and electrically connected with the conductive metal strip on the color filter substrate through a conductive metal, and a current outputted by the heating electrode is allowed to flow to the transparent conductive metal oxide film through the conductive metal strip in order for heating.

Further, a polarizer is provided on the side surface of the transparent conductive metal oxide film away from the color filter substrate.

Further, the conductive metal strip is made of a titanium aluminum alloy or silver paste.

Further, the polarizer only covers the transparent conductive metal oxide film.

Further, the conductive metal is made of silver paste.

Further, the liquid crystal display panel is provided with a driving signal by an external circuit which transmits the driving signal into the liquid crystal display panel through the heating electrode in order for heating.

Further, the external circuit is a flexible printed circuit.

Further, the transparent conductive metal oxide film is made of any one of or any combination of indium tin oxide, zinc oxide, indium zinc oxide and aluminum zinc oxide.

The present invention further provides a method for manufacturing a liquid crystal display panel, including steps of:
forming an array substrate;
forming a color filter substrate arranged opposite to the array substrate;
filling a liquid crystal between the array substrate and the color filter substrate to form a liquid crystal layer; and
forming a transparent conductive metal oxide film on a side surface of the color filter substrate facing away from the liquid crystal layer, and forming conductive metal strips separated from each other and electrically connected with the transparent conductive metal oxide film at side edges of the transparent conductive metal oxide film, where each of the conductive metal strips is only along the side edge of the transparent conductive metal oxide film, so that an external current is allowed to flow through the transparent conductive metal oxide film via the conductive metal strips; and providing a polarizer on the side surface of the transparent conductive metal oxide film away from the color filter substrate; wherein the polarizer only covers the whole transparent conductive metal oxide film.

Further, the method includes forming a heating electrode on the array substrate, wherein the heating electrode is connected electrically with the conductive metal strip provided on the color filter substrate through a conductive metal, and a current outputted by the heating electrode is allowed to flow to the transparent conductive metal oxide film through the conductive metal strip in order for heating.

Further, the conductive metal strip is made of a titanium aluminum alloy or silver paste.

Further, the method includes providing a polarizer on the side surface of the transparent conductive metal oxide film away from the color filter substrate.

Further, the polarizer only covers the transparent conductive metal oxide film.

Further, the conductive metal is made of silver paste, and the heat electrode is connected electrically with the conductive metal strip on the color filter substrate by means of dropping silver paste.

Further, the method includes providing the liquid crystal display panel with a driving signal through an external circuit, wherein the external circuit transmits the driving signal into the liquid crystal display panel through the heating electrode in order for heating.

Further, the external circuit is a flexible printed circuit.

Further, the transparent conductive metal oxide film is made of any one of or any combination of indium tin oxide, zinc oxide, indium zinc oxide and aluminum zinc oxide. Compared to the prior art, the present invention obtains a liquid crystal display panel with the improved display effect and antistatic ability at a low temperature, and with the reduced cost and the compact structure.

### Brief Description of the Drawings

Fig. 1 is a schematic view of a color filter substrate according to an embodiment of the invention.
Fig. 2 is a top view of the liquid crystal display panel according to the embodiment.
Fig. 3 is a side view of the liquid crystal display panel according to the embodiment.
Fig. 4 is a top view of another color filter substrate according to an embodiment of the invention.
Fig. 5 is a top view of a heating plate according to an embodiment of the invention.
Fig. 6 is a schematic circuit diagram of equivalent resistance of a specific heating plate.
Figs. 7-9 are side views of the color filter substrate prepared in various processing steps.

### Reference numeral list:

1: color filter substrate; 2: array substrate; 3: transparent conductive metal oxide film;
4: polarizer; 5: conductive metal strip; 6: conductive metal;
7-1,7-2: heating electrode; 8: sealant; 9: stage of an array substrate;

### Detailed Description of the Embodiments

The invention will be further described in detail with reference to the accompanying drawings and the embodiments. It should be understood that the embodiments described herein are intended merely to explain but not limit the invention. In addition, it would be further noted that the accompanying drawings only illustrate partial structures associated with the invention instead of all structures, for the sake of description.

The invention provides a liquid crystal display panel, which includes: an array substrate; a color filter substrate arranged opposite to the array substrate; and a liquid crystal layer formed between the array substrate and the color filter substrate.

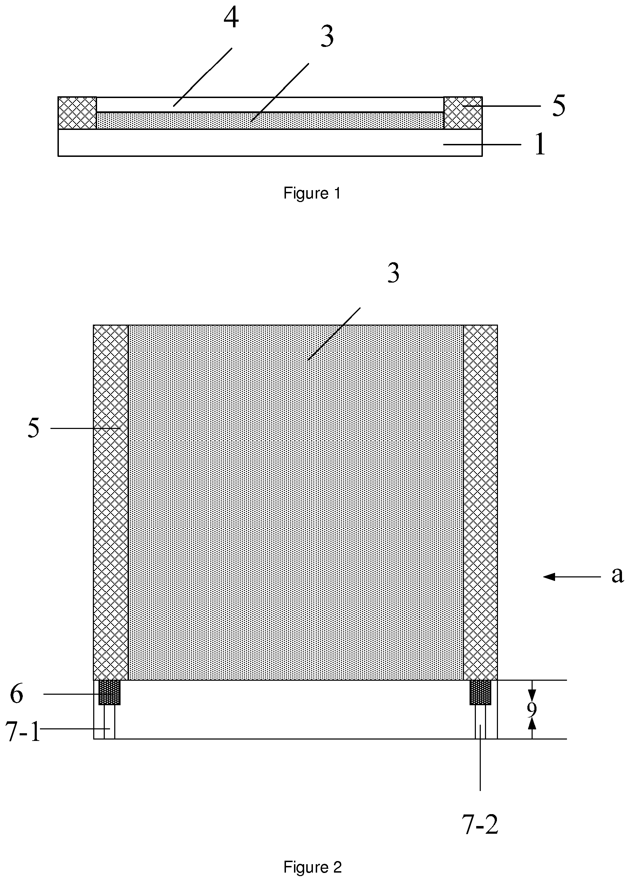

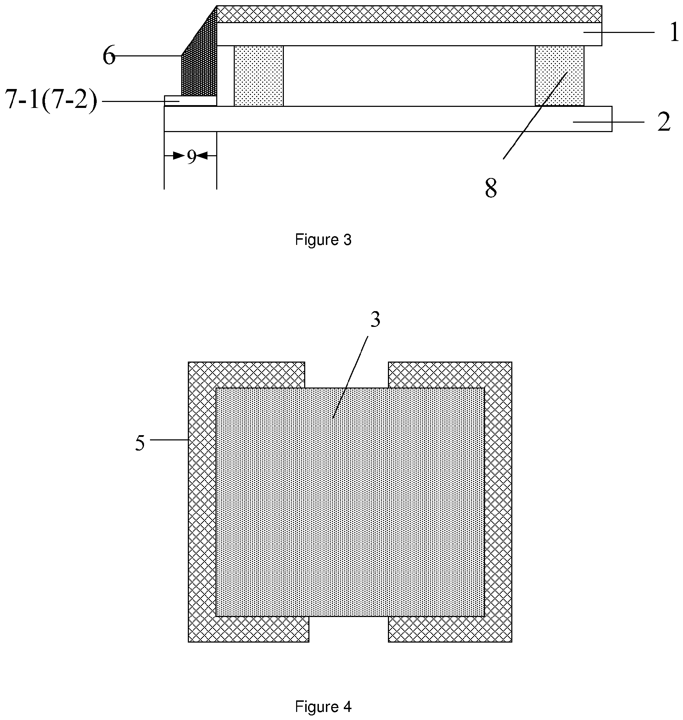

Fig. 1 is a schematic view of a color filter substrate 1 according to the invention, Fig. 2 is a top view of a liquid crystal display panel according to the invention, and Fig. 3 is a side view of the liquid crystal display panel taken along a direction in Fig. 2.

As shown in Figs. 1 and 2, a transparent conductive metal oxide film 3 lies on the side surface of the color filter substrate 1 that is away from the liquid crystal layer. The transparent conductive metal oxide film 3 may be made of any one of or any combination of indium tin oxide (ITO), zinc oxide (ZnO), indium zinc oxide (IZO) and aluminum zinc oxide (AZO), and preferably ITO. Two conductive metal strips 5, which are separated from each other, are arranged adjacent to both lateral sides of the transparent conductive metal oxide film 3, respectively, and electrically connected to the transparent conductive metal oxide film 3, so that an external current is allowed to flow through the transparent conductive metal oxide film 3 via the conductive metal strips 5. The conductive metal strip 5 may be made of silver paste or a titanium aluminum alloy, and preferably of the silver paste. More preferably, the width of the conductive metal strip 5 is of a range from 0.5mm to 1.0mm. In another embodiment, a polarizer 4 is formed on the side surface of the transparent conductive metal oxide film 3, that is away from the color filter substrate 1. Preferably, the polarizer 4 only covers the transparent conductive metal oxide film3, as shown in Fig. 1.

Due to the theory that a current flowing through a resistance will generate heat, the transparent conductive metal oxide film 3 positioned between the color filter substrate 1 and the polarizer 4 may function as a heating plate, which heats the liquid crystal display panel at a low temperature to enhance the display effect of the liquid crystal display panel, further, the transparent conductive metal oxide film 3 has a function of reducing static electricity so as to enhance the antistatic ability of the liquid crystal display panel. The conductive metal strips 5 provided adjacent to both sides of the transparent conductive metal oxide film 3 are used for current transmission, so that an external current is allowed to flow through the transparent conductive metal oxide film via the conductive metal strips 5, thereby heating the liquid crystal display panel, such that the deterioration of the image display quality and the problems of streaking and smears of the dynamic image caused by the increased response time of the liquid crystal at a low temperature will be avoided, therefore the visual effect will be improved.

It is noted that Figs. 1 and 2 illustratively show the case where the conductive metal strips 5 are provided adjacent to both lateral sides of the transparent conductive metal oxide film 3, to allow the current to flow into a conductive metal strip 5 on one side of the film 3 and flow out from the conductive metal strip 5 on the other side of the film 3. Furthermore, the conductive metal strips 5 also can be provided on other portions at the edge of the transparent conductive metal oxide film 3, as long as the conductive metal strips 5 include two separate portions separated from each other such that the current may flow into one of the portions and flow out from the other portion. Fig. 4 schematically shows a top view of another potential color filter substrate.

Further, with reference to Figs. 2 and 3, a stage portion 9 is provided on the array substrate 2, and corresponds to a region on the array substrate 2 except for the region correspondingly facing to the color filter substrate 1. The stage portion 9 is provided with heating electrodes 7-1 and 7-2, and may also include a driving chip in another embodiment. The heating electrodes 7-1 and 7-2 are connected electrically with the conductive metal strips 5 on the color filter substrate 1 through a conductive metal 6, and a current outputted by the heating electrodes 7-1 or 7-2 is allowed to flow through the transparent conductive metal oxide film 3 via the conductive metal strips 5 for the purpose of heating.

Further, the liquid crystal display panel may be provided with a driving signal by an external circuit, which transmits the driving signal into the liquid crystal display panel through the heating electrode for the purpose of heating. Specifically, the heating electrodes 7-1 and 7-2 are connected electrically with the external circuit which provides a driving voltage or current signal for the liquid crystal display panel, and the driving signal provided flows through the transparent conductive metal oxide film 3 via the heating electrodes 7-1 and 7-2. Preferably, the external circuit may be a flexible printed circuit (FPC).

The electrical connection and signal transmission between the color filter substrate 1 and the array substrate 2 is implemented through the conductive metal 6 and the heating electrodes 7-1 and 7-2. The conductive metal 6 may be made of any one or any alloy of titanium, aluminum, copper, molybdenum, silver, etc., and preferably be made of silver paste.

For example, in the case that the driving signal is provided for the liquid crystal display panel by the flexible printed circuit, the specific heating in the present embodiment is implemented in such a manner that: the driving signal is provided by the flexible printed circuit and transmitted to the liquid crystal display panel through the heating electrodes for the purpose of the heating. The flexible printed circuit provides the current for the heating electrode 7-1 (or 7-2), from which the current flows out to a conductive metal strip 5 on the side of the heating electrode 7-1 (or 7-2) through the conductive metal 6 electrically connected to the conductive metal strip 5, then the current is inputted to the transparent conductive metal oxide film 3 through the conductive metal strip 5, thereafter flows out from the other conductive metal strip 5 on another side and flows back to the heating electrode 7-2 (or 7-1) through the other conductive metal 6 connected electrically with the other conductive metal strip 5. The current flows evenly through the entire transparent conductive metal oxide film 3 due to the existence of the conductive metal strips 5, such that the transparent conductive metal oxide film 3 can generate heat evenly, hereby improving the heating effect.

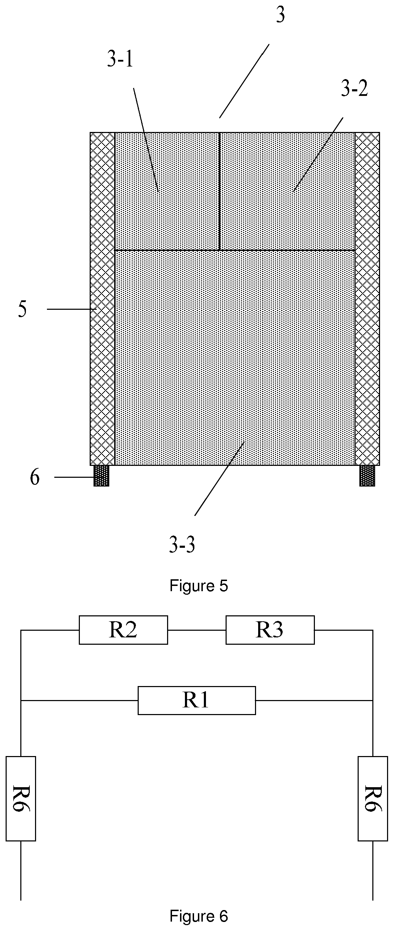

As shown in Fig. 5, the transparent conductive metal oxide film 3 may consist of three portions 3-1, 3-2 and 3-3, which are of resistances R1, R2 and R3, respectively. In addition, the resistance of the conductive metal strip 5 on one side is R6. In this case, the equivalent circuit diagram of the resistance value of the entire panel consisting of the transparent conductive metal oxide film 3 and the conductive metal strips 5 thereon is illustrated in Fig. 6. When a voltage (e.g. of 12V) is applied across the heating electrodes, the value of the resistance R of the entire panel is R=2*R6+1/(1/R1+1/(R2+R3)), thus the entire panel is provided with heat Q by the equivalent resistance R, where Q=(U²/R)T, U represents the voltage (for example, 12V) applied across the heating electrodes, and T represents the time period during which the voltage is applied. In the case of a low temperature, the display effect of the liquid crystal display panel can be enhanced when the heating electrodes are used to heat the liquid crystal display panel, thus the liquid crystal display panel can be more widely used. Furthermore, the transparent conductive metal oxide film 3 provided between the color filter substrate 1 and the upper polarizer 4 can function to reduce the static electricity, thereby enhancing the antistatic ability of the liquid crystal display panel. Thus, the structures of enhancing the display effect at a low temperature and the antistatic performance may be integrated, such that the structure of the liquid crystal display panel is simplified and the cost is reduced.

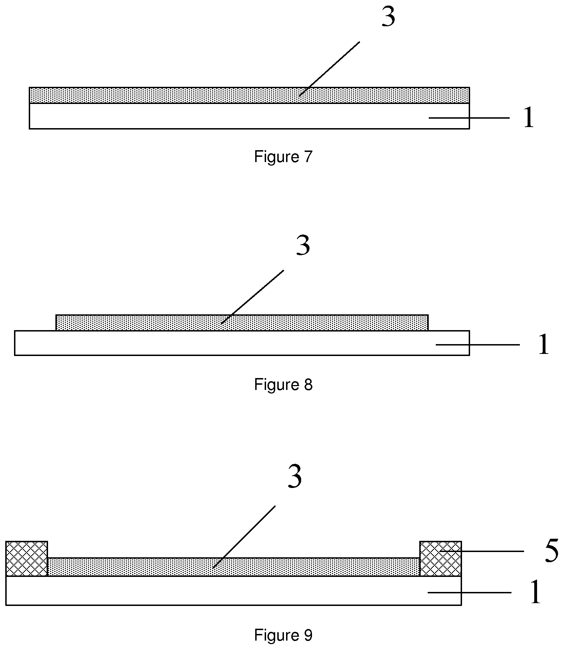

Next, the manufacturing method of the liquid crystal display panel is described in detail. As shown in Fig. 7, a layer of transparent conductive metal oxide film 3 is evenly formed on the color filter substrate 1 by means of sputtering, chemical vapor deposition, or thermal evaporation, etc. The transparent conductive metal oxide film 3 may be made of any one of or any combination of ITO, ZnO, IZO, and AZO, and preferably ITO. The thickness of the transparent conductive metal oxide film 3 may meet the requirement of the sheet resistance and the transmittance in use, and the transmittance depends on the brightness requirements of various products. In this embodiment, preferably, the sheet resistance of the transparent conductive metal oxide film 3 is 3∼15Ω/□ (ohm per square). Specifically, the sheet resistance of the transparent conductive metal oxide film 3 is 10Ω/□.

The transparent conductive metal oxide film 3 is patterned by etching away portions of the transparent conductive metal oxide film on two opposite side edges of the color filter substrate 1, and preferably, the transparent conductive metal oxide film 3 is etched by a distance of 0.5-1.0mm toward the inner part of the color filter substrate 1 at each of those two side edges of the color filter substrate 1, as shown in Fig. 8. Next, the conductive metal strips 5 are formed on the regions where the transparent conductive metal oxide film 3 is etched away, and the conductive metal strips 5 are connected electrically with the transparent conductive metal oxide film 3, as shown in Fig. 9. The conductive metal strips 5 may be made of silver paste or a titanium aluminum alloy, and preferably of silver paste, and the width of the conductive metal strip 5 preferably is 0.5-1.0mm.

Figs. 8 and 9 illustratively shows the situation where the conductive metal strips 5 are provided adjacent to two lateral sides of the transparent conductive metal oxide film 3 on the color filter substrate 1, so that the current may flow into the conductive metal strip at one side and flow out from the conductive metal strip at the other side. Alternatively, other portion of the edge of the transparent conductive metal oxide film 3 may be etched away, where the portion etched away includes two separate regions. Then, conductive metal strips may be formed on the regions where the transparent conductive metal oxide film is etched away, as long as the conductive metal strips include two separate portions separated from each other so that the current is allowed to flow into one of the two portions and flow out from the other of the two portions.

In the case that the conductive metal strips 5 are made of silver paste, a layer of ultraviolet (UV) glue is applied on the surface of the silver paste to enhance the reliability of the silver paste. The thickness of the conductive metal strips 5 may be more than the thickness of the transparent conductive metal oxide film 3 sandwiched therebetween, and in the follow step of attaching the upper polarizer 4, the polarizer 4 can be trimmed to preferably cover only over the transparent conductive metal oxide film 3. In the case that the conductive metal strips 5 are made of a titanium aluminum alloy, the thickness of the conductive metal strips 5 are substantially the same as the thickness of the transparent conductive metal oxide film 3 sandwiched therebetween, and in the follow step of attaching the polarizer 4, the polarizer 4 is placed on both the transparent conductive metal oxide film 3 and the conductive metal strips 5.

The conductive metal strips 5 are distributed evenly adjacent to two sides of the transparent conductive metal oxide film 3, the transparent conductive metal oxide film 3 functions as a heating plate, and the conductive metal strips 5 may function as two electrodes of the heating plate, such that the current is allowed to flow into the conductive metal strip 5 at one side, through the heating plate formed by the transparent conductive metal oxide film 3, and subsequently flow out from the conductive metal strip 5 at the other side, thereby enhancing the evenness of the heat generated by the heating plate.

Next, the array substrate 2 is formed, the array substrate 2 and the color filter substrate 1 are oppositely adhered together through sealant 8, as shown in Fig. 3. The array substrate 2 includes the stage portion 9, the color filter substrate 1 is formed as described above (that is, the transparent conductive metal oxide film 3 is formed on the side surface of the color filter substrate 1 away from the liquid crystal layer, and the conductive metal strips 5 insulated from each other and electrically connected with the transparent conductive metal oxide film 3 are formed on the edge of the film 3, so that the external current is allowed to flow through the transparent conductive metal oxide film 3 via the conductive metal strips 5), and liquid crystal molecules (not shown) are injected between the array substrate 2 and the color filter substrate 1. Two heating electrodes 7-1 and 7-2 are formed at two ends of the stage portion 9, respectively. The heating electrode 7-1 or 7-2 is connected electrically with the conductive metal strip 5 on the color filter substrate 1 through the conductive metal 6, and the current outputted by the heating electrode 7-1 or 7-2 flows to the transparent conductive metal oxide film 3 through the conductive metal strips 5 for the purpose of heating.

Then, the conductive metal 6 is formed between the color filter substrate 1 and the array substrate 2 by means of dropping the silver paste, or any other manners. The conductive metal 6 achieves the electrical connection between the two conductive metal strips 5 on the color filter substrate 1 and the two heating electrodes 7-1, 7-2 on the array substrate 2, respectively.

Further, the liquid crystal display panel may be provided with a driving signal by the external circuit, which transmits the driving signal into the liquid crystal display panel through the heating electrodes in order for the heating. Preferably, the external circuit is a flexible printed circuit (FPC).

In this way, the evenness of the heat generated by the heating plate may be enhanced and the heating effect may be improved. Furthermore, the transparent conductive metal oxide film 3 may also function to reduce the static electricity, thereby enhancing the antistatic ability of the liquid crystal display panel, such that the cost is reduced and the structure of the liquid crystal display panel is simplified.

Further, it is also possible to place a polarizer 4 on the side surface of the transparent conductive metal oxide film 3 away from the color filter substrate 1, as shown in Fig. 1. The polarizer 4 may cover only the transparent conductive metal oxide film 3.

It is noted that the above description illustrates the preferred embodiments and the applied technical principle of the present invention. It will be understood by those skilled in the art that the present invention is not intended to be limited to the particular embodiments mentioned herein, and various changes, rearrangements and substitutions can be made by the person skilled in the art without departing from the scope of the invention. Therefore, although the invention has been described in detail in accordance with the embodiments, the invention is not just limited to the embodiments and also can include the other equivalent embodiments without departing from the concept of the invention. The scope of the invention is defined by the appended claims.

## Claims

1. A liquid crystal display panel, comprising:
an array substrate (2);
a color filter substrate (1) arranged opposite to the array substrate (2); and
a liquid crystal layer filled between the array substrate (2) and the color filter substrate (1), wherein
a transparent conductive metal oxide film (3) lies on a side surface of the color filter substrate (1) facing away from the liquid crystal layer, conductive metal strips (5) separated from each other and electrically connected with the transparent conductive metal oxide film (3) are provided at side edges of the transparent conductive metal oxide film (3), and an external current is allowed to flow through the transparent conductive metal oxide film (3) via the conductive metal strips (5)
wherein a polarizer (4) is provided on the side surface of the transparent conductive metal oxide film (3) away from the color filter substrate (1); and the polarizer (4) covers the whole transparent conductive metal oxide film (3); and
each of the conductive metal strips (5) is only along the side edge of the transparent conductive metal oxide film (3).

2. The liquid crystal display panel of claim 1, wherein, a heating electrode (7-1, 7-2) is provided on the array substrate (2) and electrically connected with the conductive metal strips (5) on the color filter substrate (1) through a conductive metal (6), and a current outputted by the heating electrode (7-1, 7-2) is allowed to flow to the transparent conductive metal oxide film (3) through the conductive metal strips (5) in order for heating.

3. The liquid crystal display panel of claim 1, wherein, the conductive metal strips (5) are made of a titanium aluminum alloy or silver paste.

4. The liquid crystal display panel of claim 2, wherein, the conductive metal (6) is made of silver paste.

5. The liquid crystal display panel of claim 2, wherein, the liquid crystal display panel is provided with a driving signal by an external circuit which transmits the driving signal into the liquid crystal display panel through the heating electrode (7-1, 7-2) in order for heating.

6. The liquid crystal display panel of claim 5, wherein, the external circuit is a flexible printed circuit.

7. The liquid crystal display panel of any one of claims 1-6, wherein, the transparent conductive metal oxide film (3) is made of any one of or any combination of indium tin oxide, zinc oxide, indium zinc oxide and aluminum zinc oxide.

8. A manufacturing method of a liquid crystal display panel, comprising the steps of:
forming an array substrate (2);
forming a color filter substrate (1) arranged opposite to the array substrate (2); and
filling a liquid crystal between the array substrate (2) and the color filter substrate (1) to form a liquid crystal layer;
wherein the method further comprises:
forming a transparent conductive metal oxide film (3) on a side surface of the color filter substrate (1) facing away from the liquid crystal layer;
forming conductive metal strips (5) separated from each other and electrically connected with the transparent conductive metal oxide film (3) at side edges of the transparent conductive metal oxide film (3), wherein an external current is allowed to flow through the transparent conductive metal oxide film (3) via the conductive metal strips (5), and each of the conductive metal strips (5) is only along the side edge of the transparent conductive metal oxide film (3); and
providing a polarizer (4) on the side surface of the transparent conductive metal oxide film (3) away from the color filter substrate (1); wherein the polarizer (4) only covers the whole transparent conductive metal oxide film (3).

9. The manufacturing method of claim 8, wherein, the method further comprises: forming a heating electrode (7-1, 7-2) on the array substrate (2), the heating electrode (7-1, 7-2) is connected electrically with the conductive metal strips (5) provided on the color filter substrate (1) through a conductive metal (6), and a current outputted by the heating electrode (7-1, 7-2) is allowed to flow to the transparent conductive metal oxide film (3) through the conductive metal strips (5) in order for heating.

10. The manufacturing method of claim 8, wherein, the conductive metal strips (5) are made of a titanium aluminum alloy or silver paste.

11. The manufacturing method of claim 9, wherein, the conductive metal (6) is made of silver paste, and the heat electrode is connected electrically with the conductive metal strips (5) on the color filter substrate (1) by means of dropping silver paste.

12. The manufacturing method of claim 9, wherein, the method further comprises: providing the liquid crystal display panel with a driving signal through an external circuit, the external circuit transmits the driving signal into the liquid crystal display panel through the heating electrode (7-1, 7-2) in order for heating.

13. The manufacturing method of claim 12, wherein, the external circuit is a flexible printed circuit.

14. The manufacturing method of any one of claims 8-13, wherein, the transparent conductive metal oxide film (3) is made of any one of or any combination of indium tin oxide, zinc oxide, indium zinc oxide and aluminum zinc oxide.

## Patentansprüche

1. Flüssigkristallanzeigefeld, mit:
einem Arraysubstrat (2);
einem Farbfiltersubstrat (1), das entgegengesetzt zum Arraysubstrat (2) angeordnet ist; und
einer Flüssigkristallschicht, die zwischen das Arraysubstrat (2) und das Farbfiltersubstrat (1) eingefüllt ist, wobei
eine transparente, leitfähige Metalloxidschicht (3) auf einer von der Flüssigkristallschicht abgewandten Seitenfläche des Farbfiltersubstrats (1) liegt, an Seitenrändern der transparenten, leitfähigen Metalloxidschicht (3) voneinander getrennte und mit der transparenten, leitfähigen Metalloxidschicht (3) elektrisch verbundene leitfähige Metallstreifen (5) vorgesehen sind und über die leitfähigen Metallstreifen (5) ein externer Strom durch die transparente, leitfähige Metalloxidschicht (3) fließen kann,
wobei auf der vom Farbfiltersubstrat (1) abgewandten Seitenfläche der transparenten, leitfähigen Metalloxidschicht (3) ein Polarisator (4) vorgesehen ist und der Polarisator (4) die gesamte transparente, leitfähige Metalloxidschicht (3) bedeckt; und
wobei jeder der leitfähigen Metallstreifen (5) nur längs des Seitenrandes der transparenten, leitfähigen Metalloxidschicht (3) vorhanden ist.

2. Flüssigkristallanzeigefeld nach Anspruch 1, wobei eine Heizelektrode (7-1, 7-2) auf dem Arraysubstrat (2) vorgesehen und durch ein leitfähiges Metall (6) mit den leitfähigen Metallstreifen (5) auf dem Farbfiltersubstrat (1) elektrisch verbunden ist und ein von der Heizelektrode (7-1, 7-2) abgegebener Strom zum Erhitzen durch die leitfähigen Metallstreifen (5) zu der transparenten, leitfähigen Metalloxidschicht (3) fließen kann.

3. Flüssigkristallanzeigefeld nach Anspruch 1, wobei die leitfähigen Metallstreifen (5) aus einer Titanaluminiumlegierung oder Silberpaste gebildet sind.

4. Flüssigkristallanzeigefeld nach Anspruch 2, wobei das leitfähige Metall (6) aus Silberpaste gebildet ist.

5. Flüssigkristallanzeigefeld nach Anspruch 2, wobei dem Flüssigkristallanzeigefeld ein Ansteuersignal von einer externen Schaltung zugeführt wird, die das Ansteuersignal durch die Heizelektrode (7-1, 7-2) zum Erhitzen in das Flüssigkristallanzeigefeld überträgt.

6. Flüssigkristallanzeigefeld nach Anspruch 5, wobei die externe Schaltung eine flexible gedruckte Schaltung ist.

7. Flüssigkristallanzeigefeld nach einem der Ansprüche 1 bis 6, wobei die transparente, leitfähige Metalloxidschicht (3) aus Indiumzinnoxid, Zinkoxid, Indiumzinkoxid oder Aluminiumzinkoxid oder einer Kombination daraus besteht.

8. Verfahren zur Herstellung eines Flüssigkristallanzeigefeldes mit den folgenden Schritten:
Bilden eines Arraysubstrats (2);
Bilden eines zum Arraysubstrat (2) entgegengesetzt angeordneten Farbfiltersubstrats (1); und
Einfüllen eines Flüssigkristalls zwischen das Arraysubstrat (2) und das Farbfiltersubstrat (1) zur Bildung einer Flüssigkristallschicht;
wobei das Verfahren ferner Folgendes umfasst:
Bilden eines transparenten, leitfähigen Metalloxidschicht (3) auf einer von der Flüssigkristallschicht abgewandten Seitenfläche des Farbfiltersubstrats (1);
Bilden leitfähiger Metallstreifen (5), die voneinander getrennt und mit der transparenten, leitfähigen Metalloxidschicht (3) elektrisch verbunden sind, an Seitenrändern der transparenten, leitfähigen Metalloxidschicht (3), wobei über die leitfähigen Metallstreifen (5) ein externer Strom durch die transparente, leitfähige Metalloxidschicht (3) fließen kann und jeder der leitfähigen Metallstreifen (5) nur längs des Seitenrandes der transparenten, leitfähigen Metalloxidschicht (3) vorhanden ist; und
Bereitstellen eines Polarisators (4) auf der vom Farbfiltersubstrat (1) abgewandten Seitenfläche der transparenten, leitfähigen Metalloxidschicht (3); wobei der Polarisator (4) nur die gesamte transparente, leitfähige Metalloxidschicht (3) bedeckt.

9. Herstellungsverfahren nach Anspruch 8, wobei das Verfahren ferner Folgendes umfasst: Bilden einer Heizelektrode (7-1, 7-2) auf dem Arraysubstrat (2), wobei die Heizelektrode (7-1, 7-2) durch ein leitfähiges Metall (6) mit den auf dem Farbfiltersubstrat (1) vorgesehenen leitfähigen Metallstreifen (5) elektrisch verbunden ist und ein von der Heizelektrode (7-1, 7-2) abgegebener Strom zum Erhitzen durch die leitfähigen Metallstreifen (5) zu der transparenten, leitfähigen Metalloxidschicht (3) fließen kann.

10. Herstellungsverfahren nach Anspruch 8, wobei die leitfähigen Metallstreifen (5) aus einer Titanaluminiumlegierung oder Silberpaste gebildet sind.

11. Herstellungsverfahren nach Anspruch 9, wobei das leitfähige Metall (6) aus Silberpaste gebildet ist und die Heizelektrode mit den leitfähigen Metallstreifen (5) auf dem Farbfiltersubstrat (1) mittels Tröpfeln von Silberpaste elektrisch verbunden wird.

12. Herstellungsverfahren nach Anspruch 9, wobei das Verfahren ferner Folgendes umfasst: dem Flüssigkristallanzeigefeld wird durch eine externe Schaltung ein Ansteuersignal zugeführt, wobei die externe Schaltung das Ansteuersignal durch die Heizelektrode (7-1, 7-2) zum Erhitzen in das Flüssigkristallanzeigefeld überträgt.

13. Herstellungsverfahren nach Anspruch 12, wobei die externe Schaltung eine flexible gedruckte Schaltung ist.

14. Herstellungsverfahren nach einem der Ansprüche 8 bis 13, wobei die transparente, leitfähige Metalloxidschicht (3) aus Indiumzinnoxid, Zinkoxid, Indiumzinkoxid oder Aluminiumzinkoxid oder einer Kombination daraus besteht.

## Revendications

1. Panneau d'affichage à cristaux liquides, comprenant :
un substrat de réseau (2) ;
un substrat de filtre coloré (1) agencé de manière opposée au substrat de réseau (2) ; et
une couche de cristaux liquides introduite entre le substrat de réseau (2) et le substrat de filtre coloré (1),
un film transparent conducteur d'oxyde métallique (3) étant placé sur une surface latérale du substrat de filtre coloré (1) détournée de la couche de cristaux liquides, des bandes métalliques conductrices (5) qui sont séparées les unes des autres et qui sont électriquement reliées au film transparent conducteur d'oxyde métallique (3) étant prévues sur des bords latéraux du film transparent conducteur d'oxyde métallique (3), et un courant externe étant apte à traverser le film transparent conducteur d'oxyde métallique (3) par l'intermédiaire des bandes métalliques conductrices (5),
un polariseur (4) étant prévu sur la surface latérale du film transparent conducteur d'oxyde métallique (3) détournée du substrat de filtre coloré (1) ; et le polariseur (4) recouvrant l'ensemble du film transparent conducteur d'oxyde métallique (3) ; et
chacune des bandes métalliques conductrices (5) se trouvant uniquement le long du bord latéral du film transparent conducteur d'oxyde métallique (3).

2. Panneau d'affichage à cristaux liquides selon la revendication 1, une électrode de chauffage (7-1, 7-2) étant prévue sur le substrat de réseau (2) et étant reliée électriquement aux bandes métalliques conductrices (5) sur le substrat de filtre coloré (1) à travers un métal conducteur (6), et un courant fourni par l'électrode de chauffage (7-1, 7-2) étant apte à circuler vers le film transparent conducteur d'oxyde métallique (3) à travers les bandes métalliques conductrices (5) pour un chauffage.

3. Panneau d'affichage à cristaux liquides selon la revendication 1, les bandes métalliques conductrices (5) étant réalisées en un alliage de titane et d'aluminium ou en une pâte d'argent.

4. Panneau d'affichage à cristaux liquides selon la revendication 2, le métal conducteur (6) étant réalisé en une pâte d'argent.

5. Panneau d'affichage à cristaux liquides selon la revendication 2, un signal de pilotage étant fourni au panneau d'affichage à cristaux liquides par un circuit externe qui transmet le signal de pilotage dans le panneau d'affichage à cristaux liquides au moyen de l'électrode de chauffage (7-1, 7-2) pour un chauffage.

6. Panneau d'affichage à cristaux liquides selon la revendication 5, le circuit externe étant un circuit imprimé flexible.

7. Panneau d'affichage à cristaux liquides selon l'une des revendications 1 à 6, le film transparent conducteur d'oxyde métallique (3) étant composé d'oxyde d'indium et d'étain, d'oxyde de zinc, d'oxyde d'indium et de zinc ou d'oxyde d'aluminium et de zinc ou d'une combinaison de ceux-ci.

8. Procédé de fabrication d'un panneau d'affichage à cristaux liquides, comprenant les étapes suivantes :
la réalisation d'un substrat de réseau (2) ;
la réalisation d'un substrat de filtre coloré (1) agencé de manière opposée au substrat de réseau (2) ; et
l'introduction de cristal liquide entre le substrat de réseau (2) et le substrat de filtre coloré (1) de manière à former une couche de cristaux liquides ;
le procédé comprenant en outre :
la réalisation d'un film transparent conducteur d'oxyde métallique (3) sur une surface latérale du substrat de filtre coloré (1) détournée de la couche de cristaux liquides ;
la réalisation de bandes métalliques conductrices (5) qui sont séparées les unes des autres et qui sont électriquement reliées au film transparent conducteur d'oxyde métallique (3) sur des bords latéraux du film transparent conducteur d'oxyde métallique (3), un courant externe étant apte à traverser le film transparent conducteur d'oxyde métallique (3) par l'intermédiaire des bandes métalliques conductrices (5), et chacune des bandes métalliques conductrices (5) se trouvant uniquement le long du bord latéral du film transparent conducteur d'oxyde métallique (3) ; et
la prévision d'un polariseur (4) sur la surface latérale du film transparent conducteur d'oxyde métallique (3) détournée du substrat de filtre coloré (1) ; le polariseur (4) recouvrant uniquement l'ensemble du film transparent conducteur d'oxyde métallique (3).

9. Procédé de fabrication selon la revendication 8, le procédé comprenant en outre : la réalisation d'une électrode de chauffage (7-1, 7-2) sur le substrat de réseau (2), l'électrode de chauffage (7-1, 7-2) étant électriquement reliée aux bandes métalliques conductrices (5) prévues sur le substrat de filtre coloré (1) par un métal conducteur (6), et un courant fourni par l'électrode de chauffage (7-1, 7-2) étant apte à circuler vers le film transparent conducteur d'oxyde métallique (3) à travers les bandes métalliques conductrices (5) pour un chauffage.

10. Procédé de fabrication selon la revendication 8, les bandes métalliques conductrices (5) étant réalisées en un alliage de titane et d'aluminium ou en une pâte d'argent.

11. Procédé de fabrication selon la revendication 9, le métal conducteur (6) étant réalisé en une pâte d'argent, et l'électrode de chauffage étant reliée électriquement aux bandes métalliques conductrices (5) sur le substrat de filtre coloré (1) en faisant couler des goûtes de pâte d'argent.

12. Procédé de fabrication selon la revendication 9, le procédé comprenant en outre : le fournissement d'un signal de pilotage au panneau d'affichage à cristaux liquides par un circuit externe, le circuit externe transmettant le signal de pilotage dans le panneau d'affichage à cristaux liquides au moyen de l'électrode de chauffage (7-1, 7-2) pour un chauffage.

13. Procédé de fabrication selon la revendication 12, le circuit externe étant un circuit imprimé flexible.

14. Procédé de fabrication selon l'une des revendications 8 à 13, le film film transparent conducteur d'oxyde métallique (3) étant composé d'oxyde d'indium et d'étain, d'oxyde de zinc, d'oxyde d'indium et de zinc ou d'oxyde d'aluminium et de zinc ou d'une combinaison de ceux-ci.
